# EUROPÄISCHE PATENTSCHRIFT

(11) **EP 0 757 531 B1**
(45) Veröffentlichungstag und Bekanntmachung des Hinweises auf die Patenterteilung: **10.06.1998**
(21) Anmeldenummer: 95919363.2
(22) Anmeldetag: 28.04.1995
(51) Int. Cl.: A47J 43/046, A47J 43/07, A47J 36/16

(54) **KÜCHENMASCHINE MIT EINEM RÜHRGEFÄSS UND EINEM ANTRIEB FÜR EIN RÜHRWERK IN DEM RÜHRGEFÄSS**
FOOD PROCESSOR WITH A MIXING VESSEL AND A DRIVE MECHANISM FOR AN AGITATOR IN THE MIXING VESSEL
ROBOT MENAGER COMPORTANT UN BAC A AGITATION ET UN MECANISME D'ENTRAINEMENT DE L'AGITATEUR DU BAC

(30) Priorität: 28.04.1994 DE 4414821
(43) Veröffentlichungstag der Anmeldung: 12.02.1997
(73) Patentinhaber: Vorwerk & Co. Interholding GmbH, 42275 Wuppertal (DE)
(72) Erfinder: DÖRNER, Stefan, D-42697 Solingen (DE); SCHMITZ, Volker, D-42719 Solingen (DE)
(74) Vertreter: Müller, Enno, Dipl.-Ing.
(86) Internationale Anmeldenummer: EP9501633
(87) Internationale Veröffentlichungsnummer: WO9529616

(56) Entgegenhaltungen:
- EP-A- 0 350 380
- EP-A- 0 491 324
- DE-A- 3 308 780
- DE-A- 3 507 276
- FR-A- 1 314 227
- FR-A- 2 631 535
- GB-A- 634 659

## Beschreibung

Die Erfindung betrifft eine Küchenmaschine mit einem Rührgefäß und einem Antrieb für ein Rührwerk in dem Rührgefäß, wobei das Rührgefäß in seinem unteren Bereich aufheizbar ist und in einer eng anliegenden Aufnahme mit einem im wesentlichen zylindrischen Wandbereich halterbar ist.

Eine derartig ausgebildete Küchenmaschine ist aus der DE-A-35 07 276 bekannt. Hier ist ein Rührgefäß gezeigt, welches in seinem unteren Bereich konisch ausgeformt ist, derart, daß sich dieser Bereich nach unten hin verjüngt. Eine Halterung des Rührgefäßes erfolgt in einer geräteseitigen Aufnahme, welche einen entsprechend konisch geformten Wandbereich aufweist. Diese Aufnahme ist aus Aluminium gefertigt und nimmt das aus nicht rostendem Stahlblech gefertigte Rührgefäß kraftschlüssig auf. Konzentrisch zu der Aufnahme ist an deren Unterseite eine ebenfalls aus Aluminium bestehende Heizplatten-Ringfläche vorgesehen. Die Aufnahme gibt die von der Heizplatten-Ringfläche aufgenommene Wärme über die den Kraftschluß ausübende Fläche an das Rührgefäß und somit an das in dem Rührgefäß angeordnete Medium ab.

Es sind des weiteren Küchenmaschinen bekannt, bei welchen die Aufnahme PTFE beschichtet ist, um ein Fügen und Lösen von Topf und Aufnahme zu erleichtern. Es hat sich herausgestellt, daß bedingt durch die unterschiedlichen Materialien - Rührgefäß aus Edelstahl und Aufnahme bzw. Heizung aus Aluminium - bei gleicher Temperatur von Heizung/Aufnahme und Rührgefäß sich die Heizung/Aufnahme mehr ausdehnt als das Rührgefäß und somit ein Luftspalt zwischen dem Rührgefäß und der Aufnahme bzw. der Heizung entstehen kann. Hierdurch ist die kraftschlüssige Halterung gemindert, was zur Folge hat, daß ein verschlechterter Wärmeübergang erfolgt. Des weiteren ergibt sich bei Rührgefäßen, die einen vertikalen Anschlag besitzen, daß dieser den wärmeleitenden Kontakt zur Heizung verliert. Besitzt der Topf jedoch keinen vertikalen Anschlag, so erfolgt nach Einschalten der Heizung ein Abrutschen des Rührgefäßes tiefer in die Aufnahme bzw. Heizung. Folglich kann es zu einer Verklemmung nach Abkühlung der Heizung/Aufnahme und des Rührtopfes kommen, da die Heizung bzw. die Aufnahme stärker schrumpft als der Rührtopf in seinem Bodenbereich. Selbst der Konus, der einen Teil der radialen Schrumpfkräfte in axiale Ausrückkräfte umwandelt und eine eventuelle PTFE-Beschichtung mit niedrigem Reibkoeffizient bewirken keine Aufwärtsbewegung des Rührgefäßes. Weiterhin können in den durch die verschiedenen Wärmeausdehnungs-Koeffizienten von Rührgefäß und Heizung/Aufnahme gebildeten Spalt Speisereste oder dergleichen gelangen. Diese können während des Heizvorganges zu einem festen Verbacken zwischen der Aufnahme und dem Rührgefäß führen. Hiernach kann eine Entnahme des Rührgefäßes nur mit relativ hohem Kraftaufwand erfolgen.

Aufgabe der vorliegenden Erfindung ist es, eine gattungsgemäße Küchenmaschine derart verbessert auszugestalten, daß stets ein gleichmäßiger Wärmeübergang und nach Benutzung der Küchenmaschine eine Entnahme des Rührgefäßes ohne großen Kraftaufwand gegeben ist.

Gelöst wird diese Aufgabe durch die im Hauptanspruch angegebene Erfindung.

Die Unteransprüche stellen vorteilhafte Weiterbildungen dar.

Zufolge derartiger Ausgestaltung ist eine gattungsgemäße Küchenmaschine angegeben, bei welcher stets ein gleichbleibender Wärmeübergang zwischen der Aufnahme und dem Rührgefäß gegeben ist, unabhängig von der Höhe der Heiztemperatur. Weiterhin ist während des Betriebes ein kraftschlüssiger Halt stets gegeben. Nach Benutzung der Küchenmaschine wird der Kraftschluß aufgehoben, womit das Rührgefäß leicht aus der Küchenmaschine entnommen werden kann. Dies ist dadurch gelöst, daß der zylindrische Wandbereich hinsichtlich seines Durchmessers veränderbar ist, zur kraftschlüssigen Halterung des Rührgefäßes. Zur Inbetriebnahme der Küchenmaschine wird das Rührgefäß in der Maschine aufgenommen, wobei die Aufnahmewandung den unteren Bereich des Rührgefäßes umfaßt. Hiernach erfolgt eine Veränderung des Durchmessers des zylindrischen Wandbereiches der Aufnahme dahingehend, daß eine Verringerung des Durchmessers erlangt wird zur kraftschlüssigen Umklammerung des unteren Rührgefäß-Bereiches. Der Wandbereich und auch der Unterbereich des Rührgefäßes können hierbei wie im zitierten Stand der Technik konisch ausgeformt sein. Durch die variable Durchmesseranpassung des Wandbereiches kann ein Ausgleich bei unterschiedlichen Wärmeausdehnungen der Materialien erfolgen. Zur Entnahme des Rührgefäßes nach einer Benutzung wird der Durchmesser des zylindrischen Wandbereiches derart vergrößert, daß ein leichtes Abheben des Rührgefäßes von der Küchenmaschine erfolgen kann. Bedingt durch diese Ausgestaltung schmiegt sich die Aufnahme beim Betrieb der Küchenmaschine an den unteren Bereich des Rührgefäßes an. Es entsteht kein radialer Luftspalt, womit stets genügend Wärme in das Rührgefäß gelangt und einem Wärmestau entgegengewirkt wird. Sollten nach Entnahme des Rührgefäßes aus der Küchenmaschine durch Unachtsamkeit Speisen oder dergleichen an den zylindrischen Wandbereich der Aufnahme gelangen und hiernach ein weiterer Betrieb der Küchenmaschine erfolgen, so wird mittels der, durch die Vergrößerung des Durchmessers der zylindrischen Aufnahme zur Entnahme des Rührgefäßes gebildete Zwangsöffnung die festgebrannte Schicht zwischen dem Wandbereich und dem Rührgefäß aufgerissen. Es ist auch dann ein leichtes Entnehmen des Rührgefäßes aus der Küchenmaschine gegeben. Als besonders vorteilhaft erweist es sich, daß der zylindrische Wandbereich durch eine ringförmige Manschette gebildet ist. Bedingt durch diese Ausgestaltung wird eine relativ große Heizfläche gebildet, wodurch niedrigere Energiedichten am Rührgefäßmantel erzielt werden. Des weiteren erfolgt durch diese Ausbildung eine Zentrierung des Rührgefäßes in der Aufnahme. Es wird vorgeschlagen, die Aufnahme dahingehend weiterzubilden, daß die Manschette zur Freigabe des Rührgefäßes aufspreizbar ist. Nach einem Betrieb der Küchenmaschine wird zur Entnahme des Rührgefäßes der Durchmesser des zylindrischen Wandbereiches bzw. der Manschette mittels Aufspreizung vergrößert. Dies ist in einer bevorzugten Ausführungsform dadurch realisiert, daß die Manschette einen nicht geschlossenen, im wesentlichen kreisförmigen Grundriß aufweist. Um ein einfaches Aufspreizen einer derart gebildeten Manschette zu ermöglichen, wird des weiteren vorgeschlagen, das Profil des Manschettenquerschnittes sehr flach zu halten. Die Durchmesserveränderung bzw. die Aufspreizbarkeit der Manschette ist weiterhin dadurch gegeben, daß die Manschette an mindestens einem Lagerpunkt fest mit einem Maschinengehäuse verbunden ist und an weiteren Lagerpunkten in einer Aufspreizrichtung bewegbar ist. Dies kann in einer bevorzugten Ausgestaltung derart gelöst sein, daß die Manschette an der dem offenen Bereich (beispielsweise einem Schlitz) gegenüberliegenden Seite fest mit einem Maschinengehäuse, beispielsweise in Form einer Schraubverbindung, verbunden ist. In einer alternativen Ausgestaltung des Erfindungsgegenstandes kann weiterhin vorgesehen sein, daß die Manschette an zwei Lagerpunkten fest mit dem Maschinengehäuse verbunden ist und an einem weiteren Lagerpunkt in einer Aufspreizrichtung bewegbar ist. Bei einer Ausgestaltung der Manschette als einen einen im wesentlichen kreisförmigen Grundriß aufweisenden Körper wird hierbei bevorzugt, daß der dem offenen Bereich gegenüberliegende Bereich, wie bereits erwähnt, fest mit dem Maschinengehäuse verbunden ist. Weiter ist ein zusätzlicher Fixpunkt gegeben, dieser im Bereich eines eine Backe ausbildenden Schenkels der Manschette. Die Aufspreizung der Manschette erfolgt bei dieser Ausgestaltung lediglich im Bereich der der fixierten Backe gegenüberliegenden Manschetten-Backe. Letztere ist dementsprechend an dem Maschinengehäuse beweglich angeordnet, so daß dieser freie Schenkel der Manschette die Aufspreizbewegungen nachvollziehen kann. Bedingt durch diese Ausgestaltung werden bei Verwendung einer flexiblen Antriebskupplung zwischen dem Antrieb und dem Rührgefäß bzw. dessen Rührwerk Schwingungen von Rührgefäß und Heizung reduziert. Die Bewegbarkeit bzw. die Aufspreizbarkeit ist dadurch gegeben, daß die Manschette in den weiteren Lagerpunkten in Langlöchern einer Gehäuseplatte gehaltert ist. Hierzu kann die Manschette beispielsweise seitlich angeordnete Ausleger aufweisen, durch welche Schrauben oder dergleichen treten. Letztere greifen wiederum durch gehäuseseitig angeordnete Langlöcher. Diese sind so ausgelegt, daß die diese durchtretenden Schrauben oder dergleichen die Aufspreizung der Manschette nachvollziehen können. Um die genannte Ausbildung weiterhin zu verbessern, ist vorgesehen, daß die Aufspreizung zwischen zwei freikragenden Enden der Manschette durchführbar ist. An diesen freikragenden Enden der Manschette kann eine Mechanik angreifen, die eine Durchmesserveränderung der Manschette bewirkt, d.h. ein Aufspreizen oder ein Zusammendrücken der Manschette. Hierbei ist bevorzugt, daß die Spreizung hebelbetätigbar ist. Als besonders vorteilhaft erweist es sich, daß ein Spreizknebel vorgesehen ist, der zwischen den beiden Enden der Manschette wirkt. Bedingt durch diese Ausgestaltung sind relativ hohe Übersetzungskräfte erzielbar. Zudem wird durch den Einsatz eines Spreizknebels eine gleichmäßige Aufspreizung der Manschette erreicht. Es wird somit einem Wandern der Manschette auf einer Gehäuseplatte entgegengewirkt. Vorteilhafterweise ist hierbei vorgesehen, daß der Spreizknebel an einer vertikalen Drehachse bewegbar ist. Ein Verdrehen der Achse, bspw. um 90°, bewirkt eine damit einhergehende Verdrehung des Knebels, wodurch die Manschette aufgespreizt wird. Bevorzugt wird eine Ausgestaltung, bei der ein Verdrehen der Achse um 67° erfolgt. Ein Verdrehen des Spreizknebels aus dieser Aufspreizstellung heraus in eine Grundstellung bewirkt ein Zusammendrücken der Manschette in eine die kraftschlüssige Aufnahme bildende Stellung. Dies kann beispielsweise dadurch unterstützt sein, daß die Manschette aus einem federnd vorgespannten Material besteht. Als besonders vorteilhaft erweist sich hierbei, daß an den Enden der Manschette nach außen gerichtete Flansche vorgesehen sind, die mit dem Spreizknebel zusammenwirken. An diesen nach außen gerichteten, an der dem zylindrischen Wandbereich abgewandten Seite der Manschette angeordneten Flansche können beispielsweise vertikal ausgerichtete Dorne vorgesehen sein, welche Drehhülsen tragen. Auf diese Drehhülsen wirkt sodann der Spreizknebel. Letzterer kann auch mit Anschlagnasen versehen sein, so daß eine definierte Aufspreizstellung erlangt wird. Nach Erreichen dieser Stellung ist ein weiteres Verdrehen der vertikalen Drehachse nicht möglich, da die Anschlagnasen sich an den Drehhülsen bzw. an den Flanschen abstützen. Vorteilhafterweise ist vorgesehen, daß der Spreizknebel über einen Handhebel betätigbar ist. Hierdurch wird dem Benutzer ermöglicht, nach Einsetzen des Rührgefäßes in die Maschine den Durchmesser der Manschette bzw. der Aufnahme zu verringern und damit eine kraftschlüssige Verbindung zwischen der Manschette und dem unteren Bereich des Rührgefäßes herzustellen. Hierbei besteht auch die Möglichkeit, den Handhebel erst dann wieder freizugeben, wenn die Maschine abgestellt ist, d. h. nach Außerbetriebnahme der Heizung und eines eventuell eingeschalteten Rührwerkes. Erst hiernach kann der Handhebel in seine Ausgangsstellung zurückgedreht werden, was ein Aufspreizen der Manschette bewirkt. Bevorzugt ist hierbei eine Ausgestaltung, bei der der Handhebel in das Rührgefäß integriert ist. Hierzu ist zwischen dem Rührgefäß und der Maschine eine Kupplung vorgesehen, über welche die Bewegungen des in dem Rührgefäß angeordneten Handhebels auf die Drehachse des Spreizknebels übertragen werden. Die Erzielung einer kraftschlüssigen Verbindung zwischen Manschette und Rührgefäß, d. h. die Durchmesserverkleinerung der Manschette, wird dadurch unterstützt, daß die Enden der Manschette durch eine Feder gegeneinander vorgespannt sind. Ein Verdrehen des Spreizknebels entgegen der Federkraft bewirkt ein Aufspreizen der Manschette. Bei einem Zurückverdrehen des Spreizknebels in die Kraftschlußstellung der Aufnahme bewirkt die Feder ein Zusammendrücken der Manschette, in welcher Stellung bevorzugt ein Luftspalt von ca. 1,5 mm zwischen den Enden der Manschette verbleibt. Vorteilhafterweise ist die Ausgestaltung so gewählt, daß die Feder an den Flanschen angreift. Hier wird des weiteren vorgeschlagen, daß die Feder U-förmig gestaltet ist. Es sind hier auch andere Federn einsetzbar, wie beispielsweise in horizontaler Richtung wirkende Druckfedern. Es wird jedoch eine, wie bereits erwähnt, U-förmig ausgebildete Blattfeder bevorzugt. In weiterer Ausgestaltung kann voargesehen sein, daß die Vorspannung der Manschette zumindest teilweise aus inneren Spannungen der Manschette resultieren. Die Manschette weist demnach eine vordefinierbare Vorspannung auf, welche Vorspannung in Richtung auf eine Schließstellung, d. h. in eine Spannstellung, wirkt. Hierdurch bedingt sind keine weiteren Federn zur Erzielung der Kraftschlußstellung nötig. Die genannte Vorspannung kann dadurch realisiert sein, daß die Manschette einen vorzugsweise eingegossenen Stahlkern aufweist. Dieser Stahlkern wird in einer gespannten Stellung in die Manschette eingegossen, womit letztere die gewünschte Vorspannung aufweist. Hier kann vorgesehen sein, daß der einzugießende Stahlkern ein Stahlrohr-Heizkörper ist. Dieser unter Vorspannung eingegossene Stahlrohr-Heizkörper kann zumindest teilweise die erforderliche Vorspannkraft aufbringen. Die Aufheizung des unteren Bereiches des Rührgefäßes kann mittels einer unterhalb der Aufnahme angeordneten Heizung erfolgen. Die dort abgegebene Wärme wird über die Aufnahme bzw. über den im wesentlichen zylindrisch ausgebildeten Wandbereich der Manschette auf das Rührgefäß geleitet. Es wird jedoch eine Ausbildung bevorzugt, bei der ein Widerstandsheizelement vorgesehen ist, das außenseitig an der Manschette anliegt. Dies kann beispielsweise dadurch gelöst sein, daß an der Außenwandung der Manschette Heizschleifen aufgebracht sind. Die Ausbildung einer relativ dünnwandigen Manschette bietet hierbei den Vorteil einer nahezu direkten Wärmeübergabe an das Rührgefäß, wobei die Manschette etwaige Wärmeausdehnungen ausgleichen kann. Weiterhin dient die dünnwandige Ausführung der Manschette auch dazu, die Federkraft gering zu halten. Diese geringe Federkraft wiederum ist vorteilhaft für den Benutzer, da hierdurch auch die Betätigungskraft zum Aufspreizen der Manschette gering gehalten wird. Vorzugsweise ist ein Widerstandsheizelement vorgesehen, welches ein kreisförmiger Widerstandsheizdraht ist. Letzterer wird beispielsweise mittig auf die Außenwandung der Manschette angebracht, beispielsweise mittels Lötung. Hierzu kann die Außenseite der Manschette eine entsprechende Aufnahmenut aufweisen. Damit ein derartig angeordnetes Widerstandsheizelement die Aufspreizung bzw. die Bewegbarkeit der Manschette nachvollziehen kann, ist schließlich vorgesehen, daß der Widerstandsheizdraht kreisabschnittsförmig ausgebildet ist, wobei die freien Enden des Widerstandsheizdrahtes den freien Enden der Manschette zugeordnet sind. An diesen freien Enden des Widerstandsheizdrahtes erfolgt der elektrische Anschluß. Als besonders vorteilhaft erweist es sich hierbei, eine derart ausgebildete Heizungs-Manschette mit einem Mantel zu versehen, welcher die umliegenden Bauteile, insbesondere das Gehäuse der Küchenmaschine vor zu starker Wärmeeinwirkung schützt. Die geringen Strahlungsverluste nach außen haben ein effektives Aufheizen des Rührgefäßes zur Folge.

Die Erfindung ist nachstehend anhand zeichnerisch veranschaulichter Ausführungsbeispiele näher erläutert. Es zeigt:
- Fig. 1: eine erfindungsgemäße Küchenmaschine mit einem Rührgefäß in einer Seitenansicht,
- Fig. 2: die Küchenmaschine gemäß Fig. 1 in Vorderansicht,
- Fig. 3: eine weitere Darstellung der Küchenmaschine, jedoch in Draufsicht,
- Fig. 4: eine vergrößerte Darstellung des den unteren Bereich des Rührgefäßes aufnehmenden Bereiches der Küchenmaschine im Schnitt, eine erste Ausführungsform betreffend,

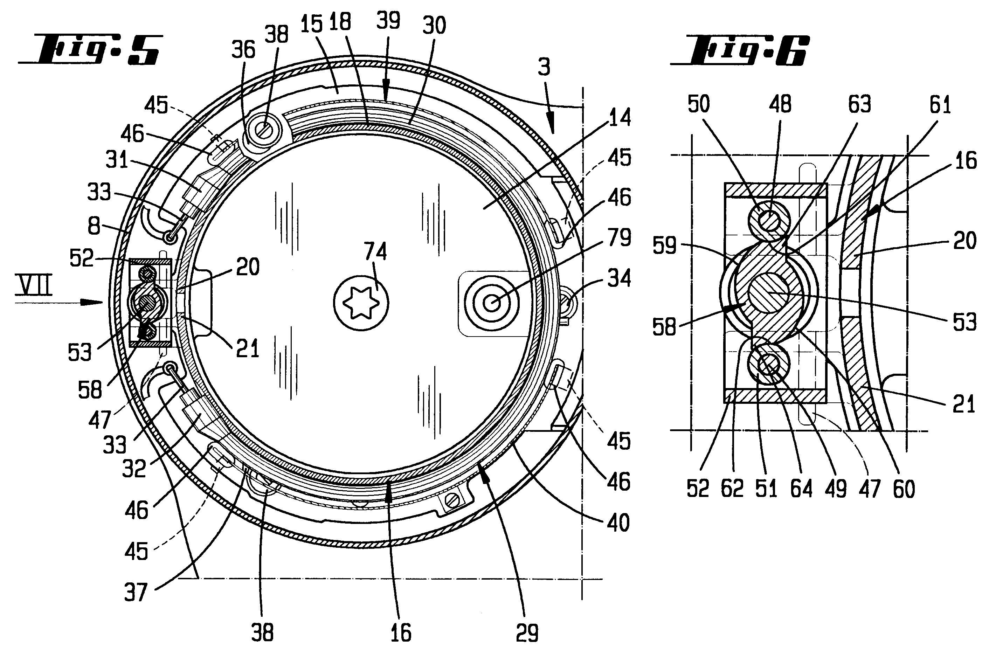

- Fig. 5: den Schnitt der Linie V-V in Fig. 4, die gespreizte Stellung einer Aufnahme-Manschette betreffend, unter Fortlassung des Rührgefäßes,
- Fig. 6: eine Detailvergrößerung aus der Fig. 5, den Bereich eines Spreizknebels betreffend,

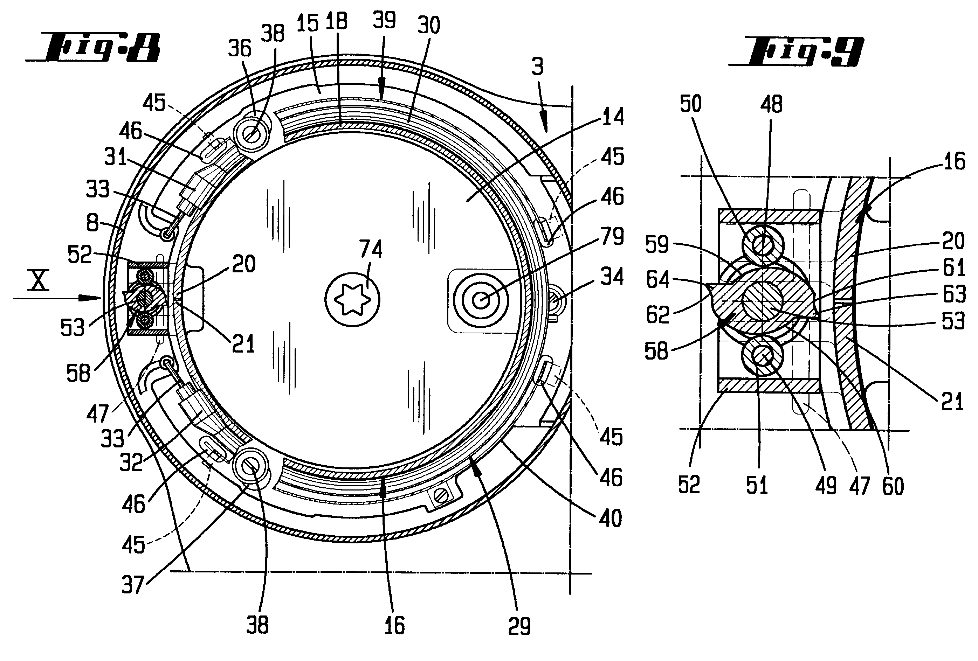

- Fig. 7: eine Ausbruchdarstellung im Bereich des Spreizknebels und zwar in Blickrichtung des Pfeiles VII in Fig. 5,
- Fig. 8: eine der Fig. 5 entsprechende Darstellung, jedoch bei entspannter, geschlossener Manschette, ebenfalls unter Fortlassung des Rührgefäßes,

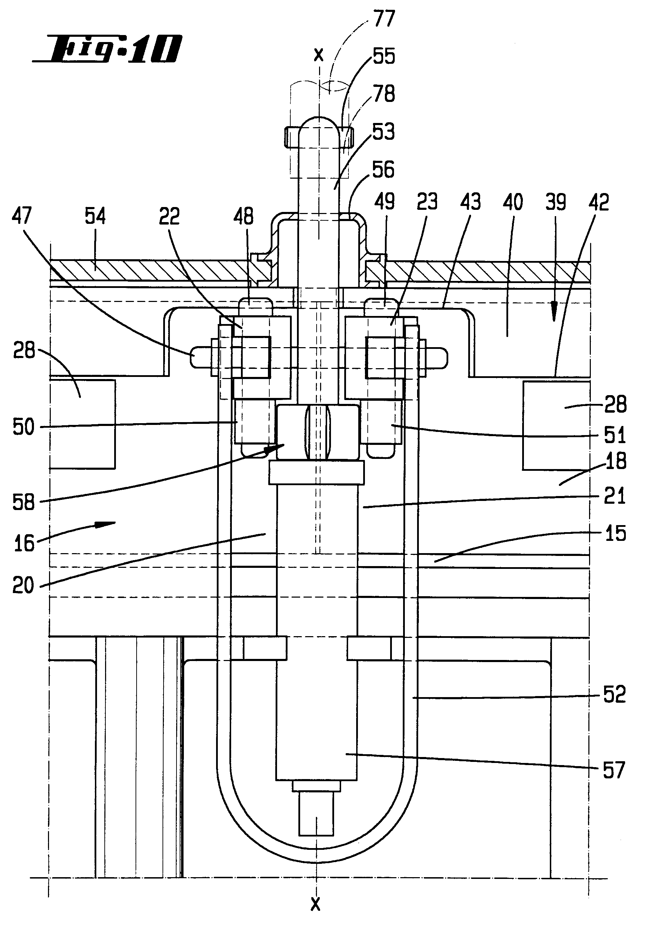

- Fig. 9: eine der Fig. 6 entsprechende Darstellung, jedoch die Stellung des Spreizknebels gemäß Fig. 8 betreffend,
- Fig. 10: eine der Fig. 7 entsprechende und die Stellung gemäß Fig. 8 betreffende Darstellung, in Blickrichtung des Pfeiles X in Fig. 8,
- Fig. 11: eine Einzeldarstellung der Manschette in Draufsicht,
- Fig. 12: den Schnitt gemäß der Linie XII-XII in Fig. 11,
- Fig. 13: die Manschette in Vorderansicht,
- Fig. 14: ein Widerstandheizelement in einer Seitenansicht,
- Fig. 15: das Widerstandsheizelement gemäß Fig. 14 in Draufsicht,
- Fig. 16: eine Einzeldarstellung eines Abschirmmantels in Draufsicht,
- Fig. 17: den Schnitt gemäß der Linie XVII-XVII in Fig. 16,
- Fig. 18: die Vorderansicht des Abschirmmantels,

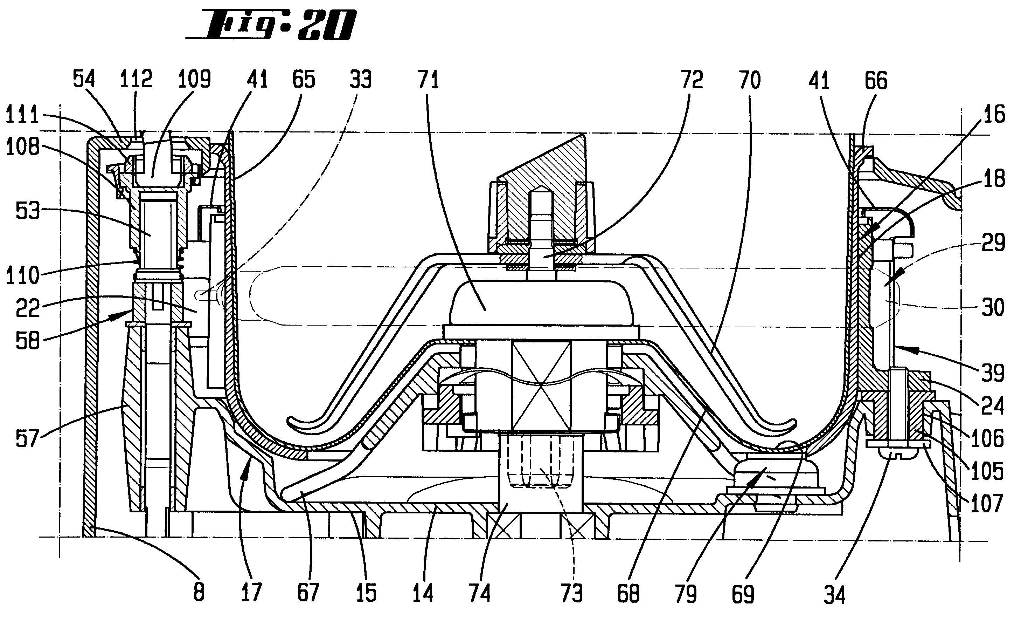

- Fig. 19: eine Zusammenbaudarstellung von Manschette, Widerstandsheizelement und Abschirmmantel in einer horizontalen Schnittdarstellung und
- Fig. 20: eine der Fig. 4 entsprechende Darstellung, jedoch eine zweite Ausführungsform betreffend.

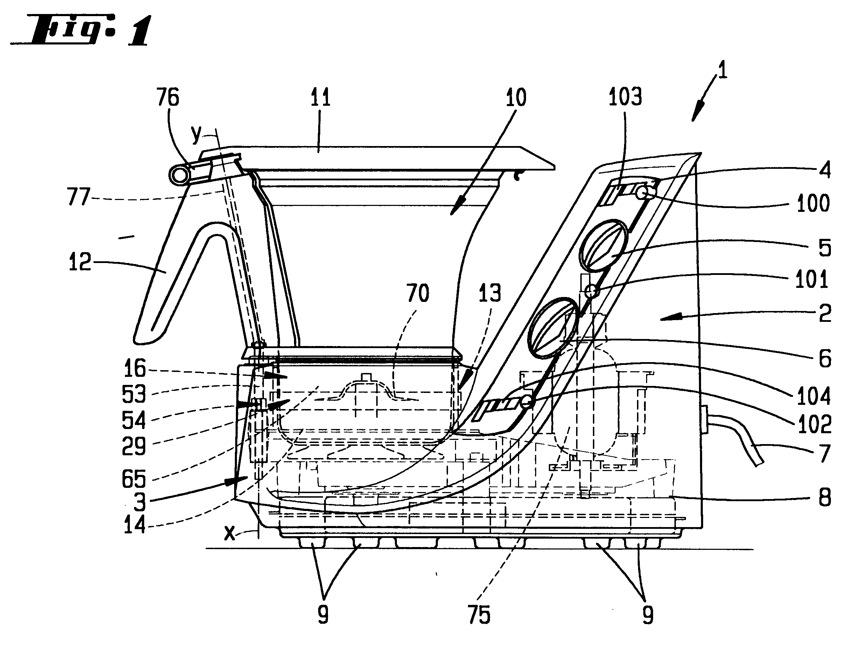

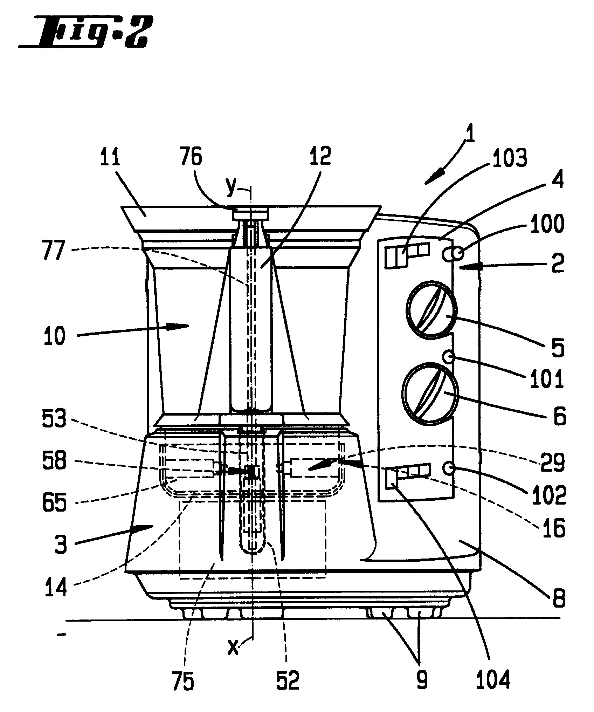

Die in den Fig. 1 bis 3 gezeigte Küchenmaschine 1 setzt sich in wesentlichen aus einem Bedien-/Steuerungsbereich 2 und einem Aufnahme-/Arbeitsbereich 3 zusammen. Letzterer ist topfförmig und in der Projektion etwa kreisrund ausgebildet. An diesem Bereich ist der Bedien-/Steuerungsbereich 2 angeformt, welcher eine um ca. 60° nach oben geneigte Bedienfläche 4 aufweist. In dieser Bedienfläche 4 sind drei Drehschalter 5, 6, 100 und zwei Druckschalter 101 und 102 angeordnet. Rückseitig des Bedien-/Steuerungsbereiches 2 der Küchenmaschine 1 ist ein Elektrokabelanschluß 7 vorgesehen. Das sich aus den beiden Bereichen 2 und 3 zusammensetzende Gehäuse 8 besitzt weiterhin unterseitig Abstellfüße 9.

Die in der Bedienfläche 4 angeordneten Drehschalter dienen zur Temperaturregelung eines Widerstandheizelements 29 (Drehschalter 5) zur Drehzahlregulierung eines Rührwerkes 70 (Drehschalter 6) und zur Einstellung eines Zeit-Displays 103 (Drehschalter 100). Mittels des Druckschalters 101 kann kurzzeitig eine maximale Drehzahl des Rührwerkes 70 erzielt werden. Der Druckschalter 102 dient als Reset-Taste für ein Waagen-Display 104.

In dem Aufnahme-/Arbeitsbereich 3 ist ein kannenartiges Rührgefäß 10 halterbar, dessen nach oben weisende Öffnung mittels eines abnehmbaren Deckels 11 verschlossen ist. Das Rührgefäß 10 ist des weiteren außenseitig mit einem Handgriff 12 versehen.

Zur Halterung des Rührgefäßes 10 ist in dem Aufnahme-/Arbeitsbereich 3 eine Aufnahme 13 vorgesehen, welche sich im wesentlichen aus einer einen Aufnahmeboden 14 bildenden Gehäuseplatte 15 und einer koaxial zum Rührgefäß 10 angeordneten Manschette 16 zusammensetzt.

Die den Aufnahmeboden 14 bildende Gehäuseplatte 15 ist in dem Aufnahmebereich topfartig ausgebildet, wobei der Aufnahmeboden 15 koaxial zur Vertikalachse des Rührgefäßes 10 ausgerichtet ist. Über diesem topfartigen Bereich 17 ist die ebenfalls koaxial zur Vertikalachse des Rührgefäßes 10 angeordnete Manschette 16 vorgesehen.

Die Manschette 16 bildet einen vertikal ausgerichteten, im wesentlichen zylindrischen Wandbereich 18 aus. Die ringförmige Manschette 16 ist durch den zylindrischen Wandbereich 18 gebildet und besitzt einen nicht geschlossenen, im wesentlichen kreisförmigen Grundriß. Das Profil des Wandbereiches 18 ist flach gehalten.

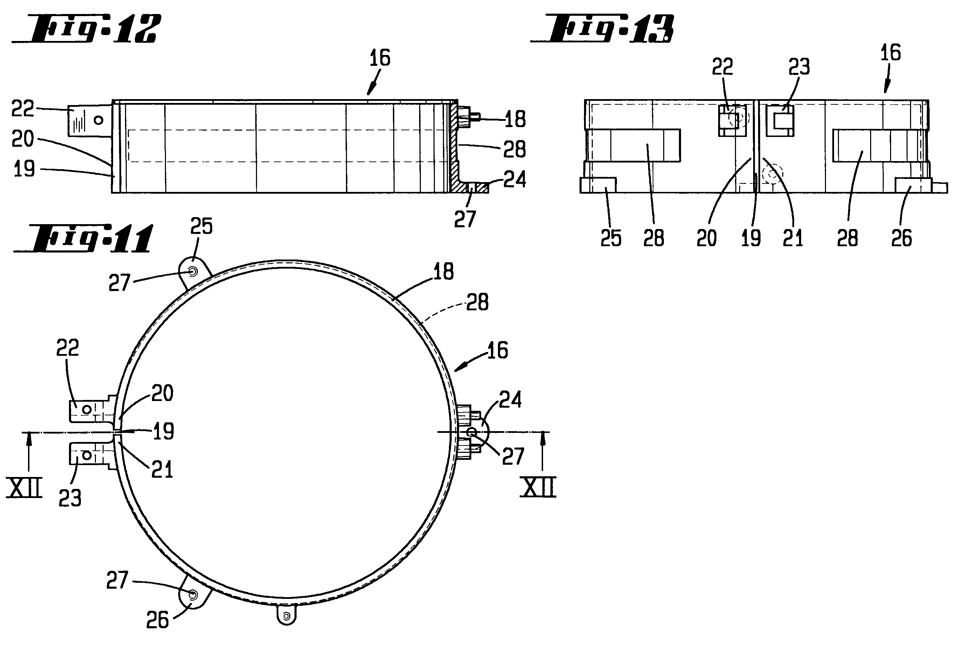

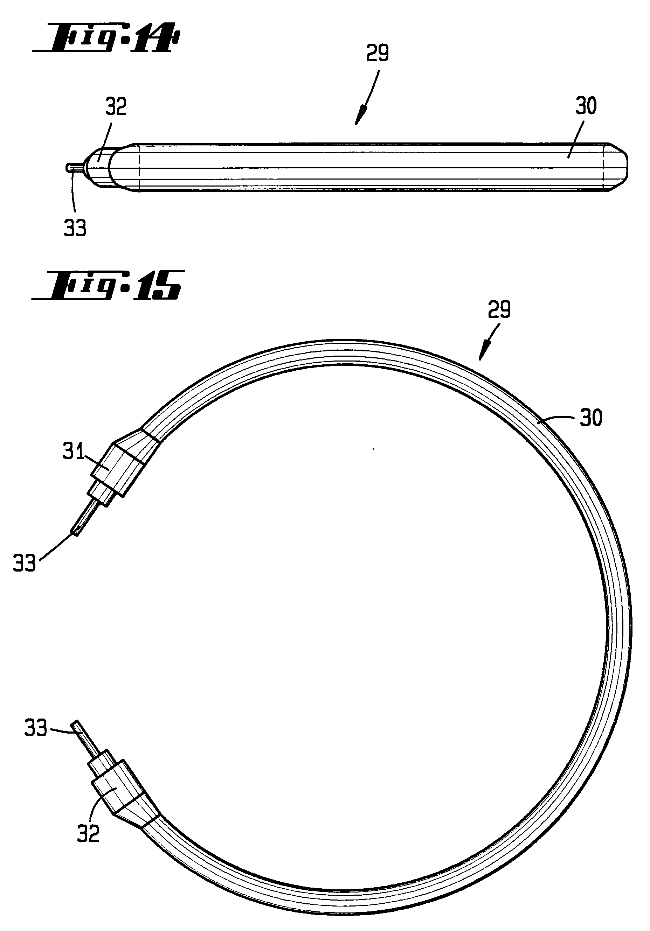

Die Fig. 11 zeigt eine Draufsicht auf die Manschette 16. Hier ist zu erkennen, daß die ringförmige Manschette 16 mit einem sich über die gesamte Höhe der Manschette 16 erstreckenden Schlitz 19 versehen ist. Die Fig. 11 bis 13 zeigen die Manschette 16 in einer entspannten, von äußeren Kräften unbeeinflußten Lage.

An den durch den Schlitz 19 gebildeten freikragenden Enden 20, 21 sind nach außen gerichtete, d.h. an der Außenwandung der Manschette 16 angeordnete und vom Zentrum der Manschette 16 abweisende Flansche 22, 23 vorgesehen.

Weiterhin besitzt die Manschette 16 am unteren Rand des Wandbereiches 18 angeordnete, ebenfalls nach außen weisende Ausleger 24 bis 26. Diese drei Ausleger 24 bis 26 sind gleichmäßig an der Außenwandung des Wandbereiches 18 verteilt, wobei stets ein Winkel von 120° zwischen zwei Auslegern eingeschlossen ist. Die Anordnung ist hierbei so getroffen, daß ein Ausleger 24 dem Bereich der freikragenden Enden 20, 21 bzw. dem Schlitz 19 gegenüberliegt. Die Ausleger 24 bis 26 sind jeweils mit Gewindebohrungen 27 versehen.

Die Manschette 16 besitzt weiterhin an ihrer Außenwandung eine radiale Ausnehmung 28, welche bezüglich der Höhe der Manschette 16 etwa mittig angeordnet ist. Die Höhe der Ausnehmung 28 entspricht etwa einem Drittel der Höhe der Manschette 16. Die Tiefe der Ausnehmung 28 beträgt in dem gezeigten Ausführungsbeispiel etwa 0,5 mm, womit in diesem Bereich der Wandbereich 18 verjüngt ausgebildet ist. Die radiale Ausnehmung 28 umläuft nahezu den gesamten Umfang der Manschette 16 bis in die freikragenden Endbereiche 20, 21, mit Abstand zu dem Schlitz 19.

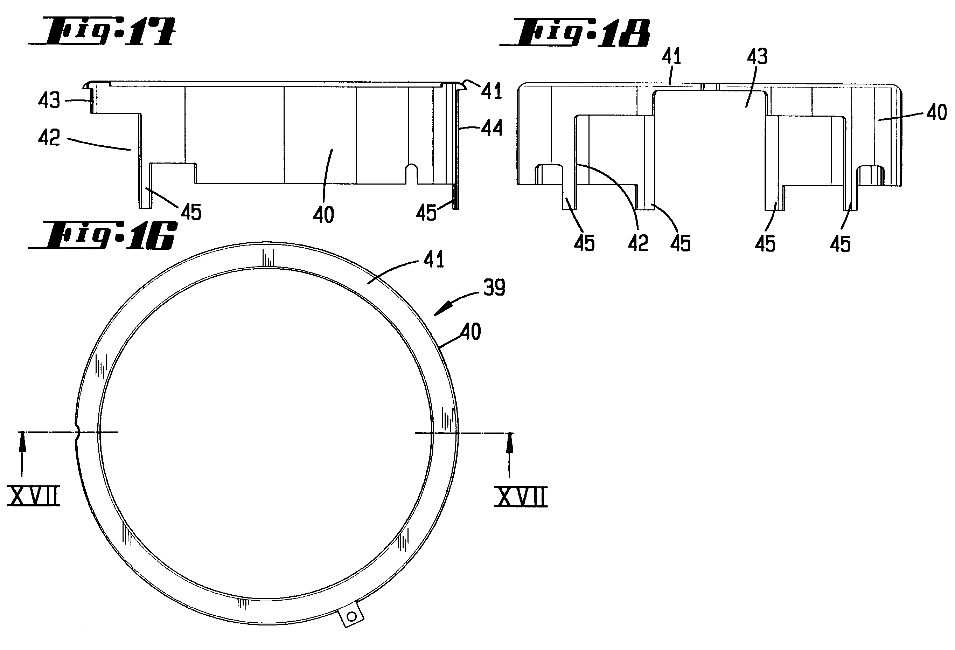

In den Fig. 14 und 15 ist das bereits erwähnte Widerstandsheizelement 29 in Form eines Widerstandsheizdrahtes 30 dargestellt. Letzterer weist einen nahezu halbkreisförmigen Querschnitt auf und ist im Grundriß kreisabschnittsförmig ausgebildet.

Der Innendurchmesser des Widerstandsheizdrahtes 30 entspricht dem Außendurchmesser der Manschette 16 im Bereich der radialen Ausnehmung 28.

In diese radiale Ausnehmung 28 der Manschette 16 ist der Widerstandsheizdraht 30 einlegbar, wobei letzterer aufgrund seiner kreisabschnittsförmigen Ausbildung die Manschette 16 umgreift. Die freien Enden 31, 32 des Widerstandsheizdrahtes 30 sind hierbei den freien Enden 20, 21 der Manschette 16 zugeordnet.

Zur sicheren Anordnung des Widerstandsheizdrahtes 30 an der Manschette 16 und zur Erzielung eines guten Wärmeüberganges kann dieser angelötet oder auch aufgeschweißt sein.

Die freien Enden 31, 32 des Widerstandsheizdrahtes 30 sind mit Elektroanschlüssen 33 versehen.

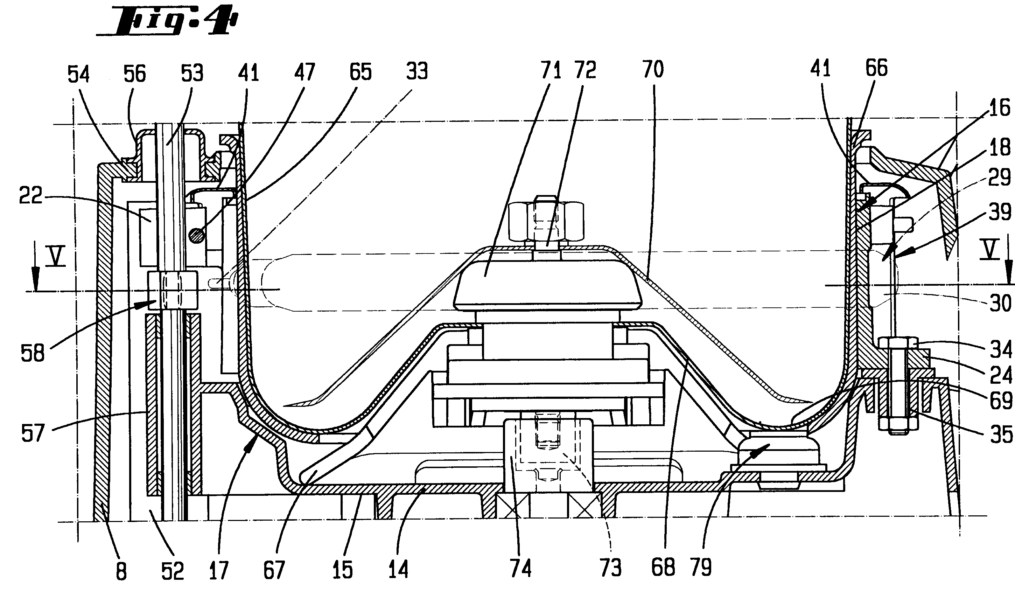

In der Fig. 4 ist in einem ersten Ausführungsbeispiel die Anordnung der Manschette 16 in dem Gehäuse 8 dargestellt. Die mit dem Widerstandsheizdraht 30 versehene Manschette 16 ist an der Gehäuseplatte 15 außerhalb des topfartigen Bereiches 17 befestigt. Der Ausleger 24 der Manschette 16 bildet einen festen Lagerpunkt, indem eine Schraube 34 den Ausleger 24 und eine diesem zugeordnete Bohrung 35 der Gehäuseplatte 15 durchtritt und an der Unterseite der Gehäuseplatte 15 gekontert ist. Die beiden anderen Ausleger 25 und 26 dienen zur Ausbildung von beweglichen Lagerpunkten. Hierzu sind den Auslegern 25 und 26 in der Gehäuseplatte 15 Langlöcher 36 und 37 zugeordnet. Die vertikale Fixierung der Manschette 16 in diesen Bereichen erfolgt mittels Schrauben 38, die sowohl die Ausleger 25 bzw. 26 als auch die Langlöcher 36 bzw. 37 durchtreten und an der Unterseite der Gehäuseplatte 15 gekontert sind.

Alternativ kann vorgesehen sein, daß die Manschette 16 neben dem festen Lagerpunkt im Bereich des Auslegers 24 einen weiteren Fixpunkt aufweist. Hierzu wird entweder der Ausleger 25 oder der Ausleger 26 ebenfalls fest mit der Gehäuseplatte 15 verbunden, wobei der den anderen Ausleger 26 bzw. 25 aufweisende Schenkel der Manschette 16 als bewegliche Backe ausgebildet ist. Die Querschnittserweiterung bzw. -reduzierung erfolgt demnach nur im Bereich eines Schenkels der Manschette 16.

Die so angeordnete Manschette 16 und das an der Außenseite des Wandbereiches 18 der Manschette 16 vorgesehene Widerstandsheizelement 29 werden radial außen von einem Abschirmmantel 39 umgeben.

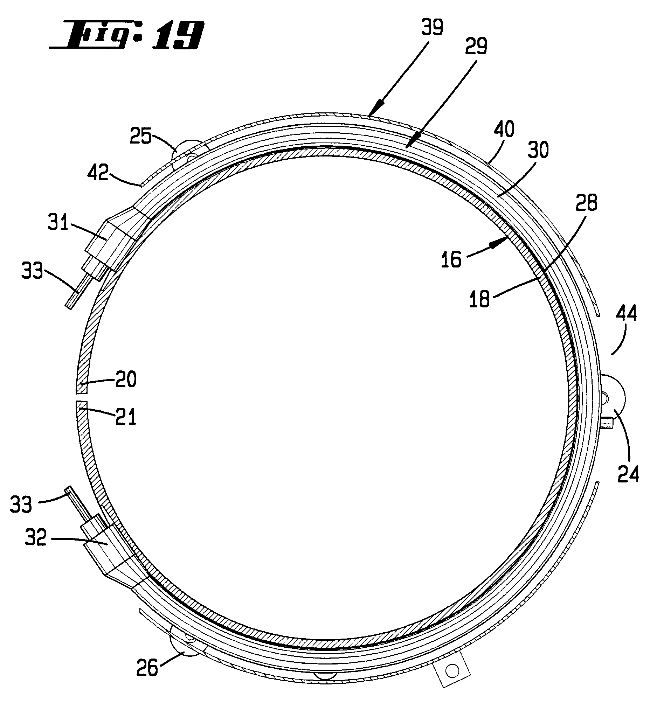

Dieser Abschirmmantel 39 ist in Figur 16 bis 18 in einer Einzeldarstellung gezeigt. Es ist zu erkennen, daß der Abschirmmantel 39 eine im Grundriß kreisförmige Mantelwandung 40 besitzt, deren Höhe etwa der Manschette 16 entspricht. An dem nach oben ragenden Ende der Mantelwandung 40 ist ein nach innen ragender Ringkragen 41 angeformt, welcher so bemessen ist, daß eine durch diese Ausgestaltung an der Oberseite des Abschirmmantels 39 gebildete Öffnung 42 einen dem Innendurchmesser der Manschette 16 entsprechenden Durchmesser aufweist. In der Mantelwandung 40 ist eine nach unten hin randoffene Ausnehmung 42 vorgesehen, welche eine Breite von etwa drei Vierteln des Durchmessers des Abschirmmantels 39 und eine Höhe von etwa zwei Dritteln der Höhe der Mantelwandung 40 aufweist. Mittig dieser Ausnehmung 42 ist diese nach oben hin, d. h. in Richtung auf den Ringkragen 41, erweitert, wobei die Breite dieses Erweiterungsbereiches 43 etwa einem Viertel des Gesamtdurchmessers des Abschirmmantels 39 entspricht. Eine entsprechend zu diesem Erweiterungsbereich 43 breitenmäßig gleichgroß ausgebildete Ausnehmung 44 ist an der der Ausnehmung 42 gegegenüberliegenden Seite der Mantelwandung 40 vorgesehen, wobei diese ebenfalls nach unten hin randoffen ausgebildet ist. Die Ausnehmung 44 und auch der Erweiterungsbereich 43 erstrecken sich nach oben hin bis in den Bereich des Ringkragens 41, unter Belassung eines Abstandes zu diesem.

Die Mantelwandung 40 besitzt desweiteren vier gleichmäßig zueinander beabstandete Laschen 45, welche eine Breite von ca. 4 bis 6 mm und eine Wandstärke gleich der Wandstärke der Mantelwandung 40 aufweisen. Die Laschen 45 ragen über den unteren Randbereich der Mantelwandung 40 hinaus.

Der Abschirmmantel 39 überdeckt weitestgehend die Manschette 16 und das an diesem angeordnete Widerstandsheizelement 29, wobei die Ausnehmung 42 und der Erweiterungsbereich 43 der Mantelwandung 40 den freien Enden 20, 21 der Manschette 16 bzw. den freien Enden 31, 32 des Widerstandsheizdrahtes 30 zugeordnet sind. Der Abschirmmantel 39 durchtritt mit seinen Laschen 45 entsprechende Durchbrechungen 46 der Gehäuseplatte 15. Zur Sicherung des Abschirmmantels 39 werden die Laschen 45 unterhalb der Gehäuseplatte 15 abgebogen, womit ein vertikales Abheben des Abschirmmantels 39 vermieden wird.

Die Flansche 22 und 23 der Manschette 16 sind mit einem horizontal ausgerichteten Stift 47 durchsetzt, dessen Enden seitlich aus den Flanschen 22 und 23 herausragen. An diesen Enden ist der Stift 47 in seiner Axialrichtung gesichert.

Jeder Flansch 22 und 23 besitzt des weiteren einen den Flansch 22 bzw. 23 vertikal durchsetzenden Steuerstift 48 bzw. 49, der nach unten hin über die Unterseite des jeweiligen Flansches 22 bzw. 23 herausragt. Auf diesen freien Enden der Steuerstifte 48, 49 sind Drehhülsen 50, 51 aufgeschoben.

Weiterhin ist eine U-förmige Blattfeder 52 vorgesehen, deren U-Schenkel nach oben weisen. Die freien Enden der U-Schenkel der Blattfeder 52 wirken von außen, seitlich auf die Flansche 22, 23, womit diese aufeinander zu federvorgespannt sind.

Zwischen den beiden Flanschen 22 und 23 tritt eine um eine Vertikalachse x drehbare Betätigungsstange 53. Das obere Ende der Betätigungsstange 53 ragt über eine Gehäusedecke 54 des Gehäuses 8 hinaus und weist dort einen horizontal ausgerichteten Mitnahmezapfen 55 auf.

Die Gehäusedecke 54 ist unmittelbar über dem Abschirmmantel 39 angeordnet, im Bereich des Durchtrittes der Betätigungsstange 53 durch die Gehäusedecke 54 eine Dichtung 56 vorgesehen ist.

Die Betätigungsstange 53 erstreckt sich nach Durchtritt durch die Gehäusedecke 54 bis in den unteren Bereich der U-förmigen Blattfeder 52 und ist in einer an der Gehäuseplatte 15 angeformten Hülse 57 drehbar gelagert.

Auf Höhe der Drehhülsen 50 und 51 der Flansche 22 und 23 besitzt die Betätigungsstange 53 einen Spreizknebel 28. Dessen Mantelfläche bildet Steuerflächen 59, 60 aus, welche in konvexe, sich gegenüberliegende Anlageflächen 61, 62 übergehen. In einem Randbereich jeder Anlagefläche 61 bzw. 62 ist eine Anschlagnase 63 bzw. 64 angeformt.

Das bereits erwähnte Rührgefäß 10 besitzt in seinem unteren Bereich 65 eine Doppelwandung in Form eines den unteren Bereich 65 umfassenden Umtopfes 66. Nach Einführen des Rührgefäßes 10 in die Aufnahme 13 stützt sich das Rührgefäß 10 mit einem Stellfuß 67 auf dem Aufnahmeboden 14 ab. Der Stellfuß 67 ist koaxial zur Vertikalachse des Rührgefäßes 10 in einem eingezogenen Bereich 68 des Rührgefäßbodens 69 angeordnet.

Koaxial zur Vertikalachse des Rührgefäßes 10 ist dieses im Bereich des Rührgefäßbodens 69 mit dem Rührwerk 70 versehen, welches mittels mit einer kugelgelagerten Halterung 71 am Rührgefäßboden 69 angeordnet ist. Das Rührwerk 70 ist auf einer Welle 72 in der Halterung 71 drehbar gelagert, wobei die Welle 72 an ihrem unteren, den Rührgefäßboden 69 durchsetzenden Ende ein Kupplungsglied 73 besitzt. Bei eingesetztem Rührgefäß 10 in die Aufnahme 13 greift dieses Kupplungsglied 73 in eine entsprechend ausgebildete Kupplungsaufnahme 74, über welche das Rührwerk 70 mittels eines Elektromotors 75 und eines zwischengeschalteten Riemengetriebes angetrieben werden kann. Die Drehzahl des Elektromotors 75 bzw. des Rührwerkes 70 ist über den Drehschalter 6 im Gehäuse 8 einstellbar.

Im Übergangsbereich zwischen dem Handgriff 12 und dem Deckel 11 des Rührgefäßes 10 ist dem Handgriff 12 ein Handhebel 76 verschwenkbar angeordnet. Koaxial zu seiner Drehachse y ist in dem Handgriff 12 eine Verlagerungsstange 77 vorgesehen, deren oberes Ende drehfest mit dem Handhebel 76 verbunden ist. Das untere freie Ende der Verlängerungsstange 77 ist gabelförmig ausgebildet. Nach Einsetzen des Rührgefäßes 10 in die Aufnahme 13 greift dieses Gabelende 78 über das über die Gehäusedecke 54 hinausragende Ende der Betätigungsstange 53 und fängt hierbei den dort angeordneten Mitnahmezapfen 55 ein. Demzufolge bewirkt eine daumenbetätigbare Verschwenkung des Handhebels 76 eine damit einhergehende Verdrehung der Betätigungsstange 53.

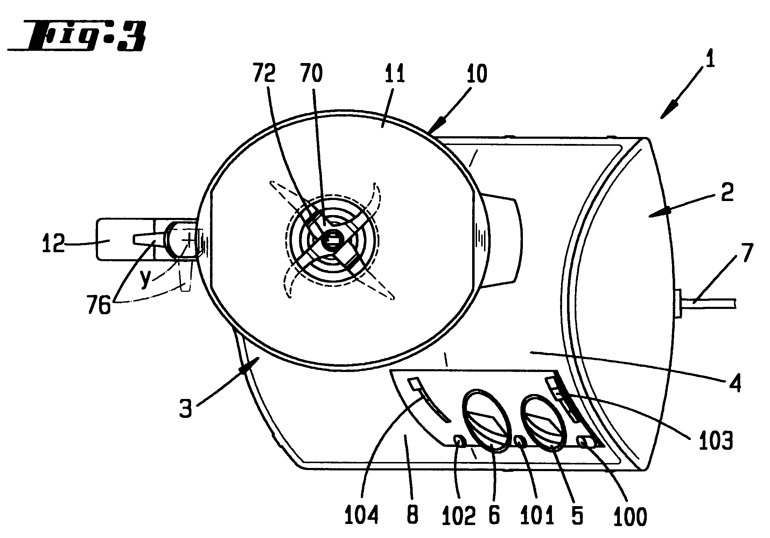

Es wird bevorzugt, daß nach Einsetzen des Rührgefäßes 10 in die Aufnahme 13 ein Verschwenken des Handhebels 76 um 90° aus der in Figur 3 strichpunktierten Stellung in die in Vollinie dargestellte Stellung erfolgt. Entsprechend vollzieht auch der Spreizknebel 58 eine Verdrehung um 90°. In dieser Stellung weist der Spreizknebel 58 einen solch kleinen Durchmesser auf, daß die sich mittels den Hülsen 57 an der Außenwandung des Spreizknebels 58 abstützenden Flansche 22 und 23 sich aufeinander zubewegen, bedingt durch die Federkraft der Blattfeder 52. Hierdurch bedingt erfolgt auch eine Bewegung der freien Enden 20, 21 der Manschette 16 in eine Gegenüberstellung gemäß Figur 8, wodurch eine Verringerung des Durchmessers des Wandbereiches 18 der Manschette 16 erzielt wird. In dieser Stellung verbleibt zwischen den Enden 20 und 21 ein Luftspalt von ca. 1,5 mm. Dementsprechend verbleiben auch, bedingt durch die Anlage der Manschette 16 am unteren Bereich 65, Luftspalte von ca. 0,75 mm zwischen den Drehhülsen 50 und 51 und dem Spreizknebel 58. Der untere Bereich 65 des Rührgefäßes 10 wird somit kraftschlüssig gehalten. Hiernach kann ein Einschalten des Widerstandsheizelementes 29 erfolgen, wobei die Steuerung der Heizleistung mittels des Drehschalters 5 im Gehäuse 8 erfolgt.

Bedingt durch diese Ausgestaltung werden im Heizbetrieb unterschiedliche Wärmeausdehnungen von Rührgefäß 10 und Manschette 16 durch die Federvorspannung kompensiert. Die Manschette 16 schmiegt sich an den unteren Bereich 65 des Rührgefäßes 10 derart an, daß kein radialer Luftspalt entsteht und somit genügend Wärme an das Rührgefäß 10 gelangt, ohne daß ein Wärmestau in der Manschette 16 entstehen kann.

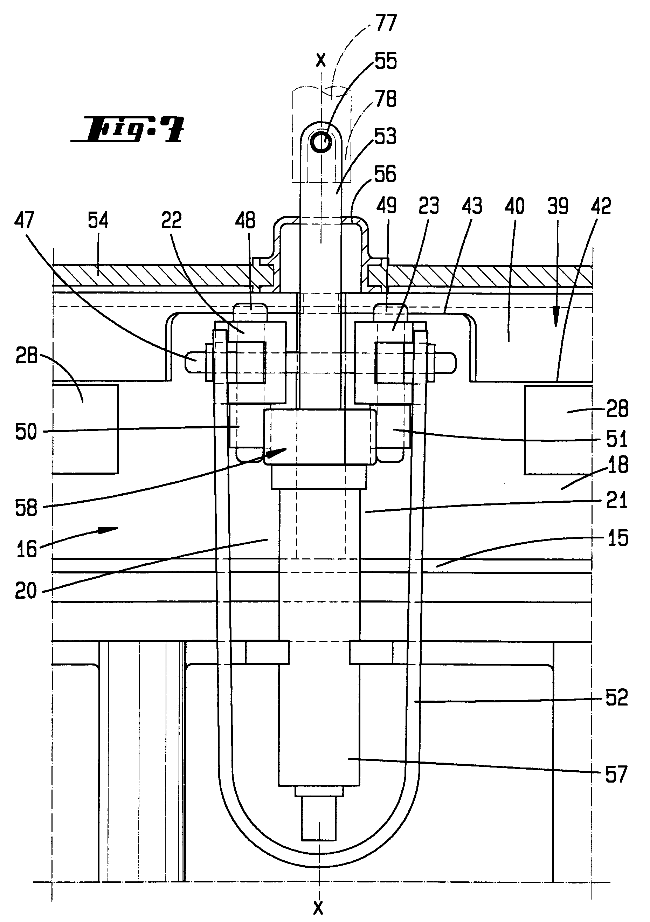

Zum Aufheben der kraftschlüssigen Halterung des Rührgefäßes 10 in der Aufnahme 13 wird der Handhebel 76 um 90 Grad in die in Figur 3 strichpunktierte Stellung zurückverschwenkt. Dies bedingt eine gleichzeitige Verdrehung des Spreizknebels 58 gleichfalls um 90 Grad, womit die an diesem anliegenden Drehhülsen 50 und 51 die Flansche 22 und 23 radial, bezogen auf die Drehachse x des Spreizknebels 58, nach außen drängen. Wie aus Fig. 6 erkennbar, liegen in dieser aufgespreizten Stellung die Drehhülsen 50 und 51 in den konvexen Anlageflächen 61, 62 des Spreizknebels 58 ein. Es ist somit eine definierte Aufspreizstellung , welche nur willensbetont verlassen werden kann, gegeben. Das Verdrehen des Spreizknebels 58 bewirkt zugleich ein Aufspreizen der Manschette 16, womit sich der Durchmesser des Wandbereiches 18 der Manschette 16 wiederum vergrößert. Hiernach ist ein leichtes Entnehmen des Rührgefäßes 10 ermöglicht.

Die vertikale Fixierung der Manschette 16 in den Langlöchern 36 und 37 ermöglichen diese Aufspreizung.

Bedingt durch die vorgenannte Ausgestaltung ist eine Zwangsöffnung zur Entnahme des Rührgefäßes 10 gegeben. Sollten sich aus Unachtsamkeit Speisereste an der Innenwandung der Manschette 16 absetzen und diese während des Heizbetriebes ein Verbacken von Manschette 16 und Rührgefäß 10 bewirken, so wird bei einem Öffnen bzw. einem Aufspreizen der Manschette 16 die festgebrannte Schicht aufgerissen, wonach das Rührgefäß 10 ohne Kraftaufwand entnommen werden kann.

Zur Überwachung der momentan vorherrschenden Temperatur in dem Rührgefäß 10 ist ein Thermofühler 79 vorgesehen, welcher in dem Aufnahmeboden 14 angeordnet ist und gegen die Unterseite des Rührgefäßbodens 69 tritt.

In der Fig. 20 ist ein zweites Ausführungsbeispiel der Anordnung der Manschette 16 in dem Gehäuse 8 dargestellt. Hier ist insbesondere eine alternative Befestigungsmöglichkeit der Manschette 16 auf der Gehäuseplatte 15 gezeigt.

In dem dargestellten Schnitt ist der den freikragenden Enden 20, 21 der Manschette 16 gegenüberliegende feste Lagerpunkt gezeigt. Der dort angeordnete Ausleger 24 weist, wie in dem ersten Ausführungsbeispiel, eine mit einem Gewinde versehene Bohrung auf. Zwischen dem Ausleger 24 und der Gehäuseplatte 15 ist eine Isolationsbuchse 105 zur Wärmeisolierung zwischengeschaltet. Letztere liegt mit einem Ringkragen auf der Gehäuseplatte 15 auf und taucht mit einem zylindrisch ausgeformten Bereich in eine entsprechend ausgeformte Öffnung 106 der Gehäuseplatte 15 ein. Diese Öffnung 106 ist an dem festen Lagerpunkt im Bereich des Auslegers 24 als eine kreisförmige Durchbrechung ausgeformt. Im Bereich der beweglichen Ausleger 25 und 26 sind dementsprechende Langlöcher als Öffnungen 106 ausgebildet.

Die Festlegung des Auslegers 24 an die Gehäuseplatte 15 erfolgt mittels einer Schraube 34, welche von einer Unterseite der Gehäuseplatte 15 durch die Isolationsbuchse 105 in das Gewinde des Auslegers 24 tritt. Zwischen Schraubenkopf und Isolationsbuchse 105 ist eine Unterlegscheibe 107 angeordnet, welche Spiel in vertikaler Richtung zur Gehäuseplatte 15 hat. Diese Unterlegscheibe 107 bildet den Vertikalanschlag der Manschette 16. Die Befestigungen der Ausleger 25 und 26 sind dieser Befestigung entsprechend ausgebildet.

Zur drehbaren Betätigung der Betätigungsstange 53 besitzt diese kopfseitig, d. h. der Gehäusedecke 54 zugewandt, eine Kupplungsaufnahme 108, in welche formschlüssig ein hammerkopfartiger Kupplungsfortsatz 109 des Rührgefäßes 10 eingreift. Letzterer ist über den Handhebel 76 des Rührgefäßes 10 drehbar, wobei zur Aufspreizung der Manschette 16 ein Verschwenken des Handhebels 76 um 67° erfolgt.

Die Kupplungsaufnahme 108 ist in vertikaler Richtung auf der Betätigungsstange 53 bewegbar, wobei eine Druckfeder 110 die Kupplungsaufnahme 108 stets in Richtung auf die Gehäusedecke 54 belastet. Oberseitig besitzt die Kupplungsaufnahme 108 einen Dichtaufsatz 111, welcher eine einer Gehäusedeckenöffnung 112 entsprechend ausgeformte Kontur aufweist. Nach Abnahme des Rührgefäßes 10 bewegt sich die Kupplungsaufnahme 108 nach oben hin in Richtung auf die Gehäusedecke 54, wobei der Aufsatz 111 sich im Bereich der Deckenöffnung 112 dichtend abstützt. Ein Aufsetzen des Rührgefäßes 10 bewirkt eine Abwärtsverlagerung der Kupplungsaufnahme 108 in die in Fig. 20 dargestellte Stellung.

Der Dichtaufsatz 111 weist eine Durchtrittsöffnung für den Kupplungsfortsatz 109 auf, welche der hammerkopfartigen Ausgestaltung des Fortsatzes 109 entsprechend ausgebildet ist. Wird die Kupplungsaufnahme 108 verriegelt, so taucht nach einem entsprechenden Verschwenken um bspw. 67° der hammerkopfartige Kupplungsfortsatz 109 unter den Dichtaufsatz 111. Hier wird sich das Schlüssellochprinzip zu Nutze gemacht. Hiernach kann das Rührgefäß 10 auch nicht mit Gewalt von der Küchenmaschine 1 abgezogen werden. Somit ist sichergestellt, daß auch bei einer bewußten Fehlbedienung die Küchenmaschine 1 nicht ohne das Rührgefäß 10 betrieben werden kann.

Durch die spezielle Formgebung des Dichtaufsatzes 111 ist der Benutzer gezwungen, den Kupplungsfortsatz 109 gänzlich in dessen Endstellung und damit den Spreizknebel 58 in seine Raststellung zu verdrehen, um das Rührgefäß 10 von der Küchenmaschine 1 abzunehmen. Ohne diese spezielle Form des Schlüsselloches könnte die Manschette 16 der Heizung durch eine teilweise Drehung des Spreizknebels 58 gespreizt und das Rührgefäß 10 herausgezogen werden. Der hammerkopfartige Kupplungsfortsatz 109 käme außer Eingriff mit der Kupplungsaufnahme 108, wodurch, bedingt durch die Federvorspannung, die Manschette 16 der Heizung wieder zuschnappen würde.

Die Manschette 16 der Heizung wäre somit durch den Benutzer nicht wieder spreizbar.

Gegenstand einer Weiterbildung der Erfindung ist auch eine Küchenmaschine, bei welcher die Manschette 16 einen nicht geschlossenen, im wesentlichen kreisförmigen Grundriß aufweist.

Gegenstand einer Weiterbildung der Erfindung ist auch eine Küchenmaschine, bei welcher die Manschette 16 an zwei Lagerpunkten fest mit dem Maschinengehäuse 8 verbunden ist und an einem weiteren Lagerpunkt in einer Aufspreizrichtung bewegbar ist.

Gegenstand einer Weiterbildung der Erfindung ist auch eine Küchenmaschine, bei welcher die Manschette 16 in den weiteren Lagerpunkten 15 gehaltert ist.

Gegenstand einer Weiterbildung der Erfindung ist auch eine Küchenmaschine, bei welcher die Aufspreizung hebelbetätigbar ist.

Gegenstand einer Weiterbildung der Erfindung ist auch eine Küchenmaschine, bei welcher der Spreizknebel 58 an einer vertikalen Drechachse x bewegbar ist.

Gegenstand einer Weiterbildung der Erfindung ist auch eine Küchenmaschine, bei welcher an den Enden 20, 21 der Manschette 16 nach außen gerichtete Flansche 22, 23 vorgesehen sind, die mit dem Spreizknebel 58 zusammenwirken.

Gegenstand einer Weiterbildung der Erfindung ist auch eine Küchenmaschine, bei welcher der Handhebel 76 in das Rührgefäß 10 integriert ist.

Gegenstand einer Weiterbildung der Erfindung ist auch eine Küchenmaschine, bei welcher die Feder 52 an den Flanschen 22, 23 angreift.

Gegenstand einer Weiterbildung der Erfindung ist auch eine Küchenmaschine, bei welcher die Feder 52 U-förmig gestaltet ist.

Gegenstand einer Weiterbildung der Erfindung ist auch eine Küchenmaschine, bei welcher die Manschette 16 einen vorzugsweise eingegossenen Stahlkern aufweist.

Gegenstand einer Weiterbildung der Erfindung ist auch eine Küchenmaschine, bei welcher das Widerstandsheizelement 29 ein kreisförmiger Widerstandsheizdraht 30 ist.

Gegenstand einer Weiterbildung der Erfindung ist auch eine Küchenmaschine, bei welcher der Widerstandsheizdraht 30 kreisabschnittsförmig ausgebildet ist, wobei die freien Enden 31, 32 des Widerstandsheizdrahtes 30 den freien Enden 20, 21 der Manschette 16 zugeordnet sind.

## Patentansprüche

1. Küchenmaschine (1) mit einem Rührgefäß (10) und einem Antrieb (75) für ein Rührwerk (70) in dem Rührgefäß (10), wobei das Rührgefäß (10) in seinem unteren Bereich (65) aufheizbar ist und in einer eng anliegenden Aufnahme (13) mit einem im wesentlichen zylindrischen Wandbereich (18) halterbar ist, dadurch gekennzeichnet, daß der zylindrische Wandbereich (18) hinsichtlich seines Durchmessers veränderbar ist, zur kraftschlüssigen Halterung des Rührgefäßes (10).

2. Küchenmaschine nach Anspruch 1, dadurch gekennzeichnet, daß der zylindrische Wandbereich (18) durch eine ringförmige Manschette (16) gebildet ist.

3. Küchenmaschine nach einem oder mehreren der vorhergehenden Ansprüche, dadurch gekennzeichnet, daß die Manschette (16) zur Freigabe des Rührgefäßes (10) aufspreizbar ist.

4. Küchenmaschine nach einem oder mehreren der vorhergehenden Ansprüche, dadurch gekennzeichnet, daß die Manschette (16) an mindestens einem Lagerpunkt fest mit einem Maschinengehäuse (8) verbunden ist und an weiteren Lagerpunkten in einer Aufspreizrichtung bewegbar ist.

5. Küchenmaschine nach einem oder mehreren der vorhergehenden Ansprüche, dadurch gekennzeichnet, daß die Aufspreizung zwischen freikragenden Enden (20, 21) der Manschette (16) durchführbar ist.

6. Küchenmaschine nach einem oder mehreren der vorhergehenden Ansprüche, dadurch gekennzeichnet, daß ein Spreizknebel (58) vorgesehen ist, der zwischen den beiden Enden (20, 21) der Manschette (16) wirkt.

7. Küchenmaschine nach einem oder mehreren der vorhergehenden Ansprüche, dadurch gekennzeichnet, daß der Spreizknebel (58) über einen Handhebel (76) betätigbar ist.

8. Küchenmaschine nach einem oder mehreren der vorhergehenden Ansprüche, dadurch gekennzeichnet, daß die Enden (20, 21) der Manschette (16) durch eine Feder (52) gegeneinander vorgespannt sind.

9. Küchenmaschine nach einem oder mehreren der vorhergehenden Ansprüche, dadurch gekennzeichnet, daß die Vorspannung der Manschette (16) zumindest teilweise aus inneren Spannungen der Manschette (16) resultieren.

10. Küchenmaschine nach einem oder mehreren der vorhergehenden Ansprüche, dadurch gekennzeichnet, daß ein Widerstandsheizelement (29) vorgesehen ist, das außenseitig an der Manschette (16) anliegt.

## Claims

1. Kitchen machine (1) with a stirrer vessel (10) and a drive (75) for an agitator (70) in the stirrer vessel (10), wherein the stirrer vessel (10) can be heated up in its lower region (65) and can be supported in a close-fitting receptacle (13) with an essentially cylindrical wall region (18), characterised in that the cylindrical wall region (18) is variable in diameter, for support of the stirrer vessel (10) in force-locking relationship.

2. Kitchen machine according to claim 1, characterised in that the cylindrical wall region (18) is formed by an annular sleeve (16).

3. Kitchen machine according to one or more of the preceding claims, characterised in that the sleeve (16) can be expanded for release of the stirrer vessel (10).

4. Kitchen machine according to one or more of the preceding claims, characterised in that the sleeve (16) is rigidly connected to a machine housing (8) at at least one bearing point and is movable in an expanding direction at other bearing points.

5. Kitchen machine according to one or more of the preceding claims, characterised in that expansion can be carried out between freely projecting ends (20, 21) of the sleeve (16).

6. Kitchen machine according to one or more of the preceding claims, characterised in that an expanding toggle (58) is provided, which acts between the two ends (20, 21) of the sleeve (16).

7. Kitchen machine according to one or more of the preceding claims, characterised in that the expanding toggle (58) can be operated by a hand lever (76).

8. Kitchen machine according to one or more of the preceding claims, characterised in that the ends (20, 21) of the sleeve (16) are biased towards each other by a spring (52).

9. Kitchen machine according to one or more of the preceding claims, characterised in that the bias of the sleeve (16) results at least partially from internal stresses of the sleeve (16).

10. Kitchen machine according to one or more of the preceding claims, characterised in that a resistance heating element (29) is provided, which abuts against the outside of the sleeve (16).

## Revendications

1. Robot ménager (1) comportant un récipient à agitation (10) et un moyen d'entraînement (75) pour un agitateur (70) dans le récipient à agitation (10), dans lequel le récipient à agitation (10), dans sa zone inférieure (65), est susceptible d'être chauffé et d'être maintenu dans un logement étroit (13) présentant une zone de paroi (18) sensiblement cylindrique (18), caractérisé en ce que la zone de paroi cylindrique présente un diamètre qui est susceptible d'être modifié afin d'obtenir une fixation par liaison à force du récipient à agitation (10).

2. Robot ménager selon la revendication 1, caractérisé en ce que la zone de paroi cylindrique (18) est constituée par une manchette (16) de forme annulaire.

3. Robot ménager selon l'une ou plusieurs des revendications précédentes, caractérisé en ce que la manchette (16) est susceptible de s'écarter pour libérer le récipient à agitation (10).

4. Robot ménager selon l'une ou plusieurs des revendications précédentes, caractérisé en ce que la manchette (16) est reliée rigidement en au moins un point d'appui à un corps de machine (8) et, en d'autres points d'appui, est susceptible de se déplacer dans une direction d'écartement.

5. Robot ménager selon l'une ou plusieurs des revendications précédentes, caractérisé en ce que l'écartement est susceptible d'être réalisé entre les extrémités (20, 21) de la manchette (16) librement appliquées pour former un collet.

6. Robot ménager selon l'une ou plusieurs des revendications précédentes, caractérisé en ce qu'il comporte une came d'écartement (58), qui agit entre les deux extrémités (20, 21) de la manchette (16).

7. Robot ménager selon l'une ou plusieurs des revendications précédentes, caractérisé en ce que la came d'écartement (58) est susceptible d'être actionnée par l'intermédiaire d'un levier à main (76).

8. Robot ménager selon l'une ou plusieurs des revendications précédentes, caractérisé en ce que les extrémités (20, 21) de la manchette (16) sont sollicitées en précontrainte l'une vers l'autre par un ressort (52).

9. Robot ménager selon l'une ou plusieurs des revendications précédentes, caractérisé en ce que la précontrainte de la manchette (16) résulte au moins partiellement de contraintes intérieures de la manchette (16).

10. Robot ménager selon l'une ou plusieurs des revendications précédentes, caractérisé en ce qu'il comporte un élément de chauffage par résistance (29), qui est disposé du côté extérieur sur la manchette (16).
